Europäisches Patentamt

European Patent Office

Office européen des brevets

(11) Veröffentlichungsnummer : **0 075 111**
**B1**

# (12) EUROPÄISCHE PATENTSCHRIFT

(45) Veröffentlichungstag der Patentschrift :
**28.05.86**

(21) Anmeldenummer : **82107461.4**

(22) Anmeldetag : **17.08.82**

(51) Int. Cl.⁴ : **B 60 C 11/00**

(54) **Laufflächengestaltung für Fahrzeugluftreifen.**

(30) Priorität : **19.09.81 DE 3137334**

(43) Veröffentlichungstag der Anmeldung :
**30.03.83 Patentblatt 83/13**

(45) Bekanntmachung des Hinweises auf die Patenterteilung : **28.05.86 Patentblatt 86/22**

(84) Benannte Vertragsstaaten :
**AT BE CH DE FR GB IT LI NL SE**

(56) Entgegenhaltungen :
**CH-A- 207 158
DE-A- 2 933 485
FR-A- 798 205
FR-A- 1 317 964
FR-A- 1 580 205
FR-A- 2 496 562
GB-A- 290 853
GB-A- 491 139
US-A- 2 119 557**

(73) Patentinhaber : **Continental Gummi-Werke Aktiengesellschaft
Königsworther Platz 1
D-3000 Hannover 1 (DE)**

(72) Erfinder : **Seitz, Hans, Dr. Dipl.-Ing.
Grafenbergerstrasse 58
D-3012 Langenhagen 1 (DE)**
Erfinder : **Rach, Heinz-Dieter
Planetenring 32
D-3008 Garbsen 1 (DE)**
Erfinder : **Pieper, Henner
Bahnhofstrasse 2B
D-3012 Langenhagen 1 (DE)**
Erfinder : **Frerichs, Udo
Buchenweg 7
D-3012 Langenhagen 8 (DE)**

## Beschreibung

Die Erfindung betrifft eine Laufflächengestaltung für Fahrzeugluftreifen für Reserveräder, mit in großer Anzahl in Reifenumfangsrichtung nebeneinander und hintereinander angeordneten Vertiefungen, die bei etwa rechteckigem Grundriß quer zur Reifenumfangsrichtung verlaufen, und mit Querstegen und Umfangsstegen, die die Vertiefungen voneinander trennen und eine Breite aufweisen, die etwa 1/4 bis 3/4 der Umfangserstreckung der benachbarten Vertiefungen entspricht.

Derartige, durch die DE-A-2 933 485 bekannte, Laufflächengestaltungen sind für Reservereifen für PKW vorgeschlagen worden, um ein geräuschvolles Abrollen des Reifens auf der Straße zu erzielen und um das Gewicht von Reservereifen zu reduzieren.

Zwar wird mit diesen bekannten Reservereifen eine gegenüber üblichen Reifen erhöhte Geräuschabgabe erzielt, doch hat sich gezeigt, daß die vom Reifen stammenden Fahrgeräusche nicht in allen Fällen ausreichen, um einen PKW-Fahrer darauf hinzuweisen, daß er einen möglichst umgehend auszuwechselnden Reservereifen montiert hat.

Der Erfindung liegt deshalb die Aufgabe zugrunde, eine Laufflächengestaltung anzugeben, die eine beim Fahrbetrieb erhöhte Geräuschabgabe mit sich bringt.

Diese Aufgabe wird erfindungsgemäß dadurch gelöst, daß die radial außenliegende Umfangsfläche des Reifens in mehrere in Umfangsrichtung aufeinanderfolgende Abschnitte unterteilt ist, daß innerhalb eines jeden Abschnitts die Umfangserstreckung der Vertiefungen und der Querstege konstant ist und daß bei den aufeinanderfolgenden Abschnitten die Umfangserstreckung der Vertiefungen und der Querstege unterschiedlich gewählt ist.

Die Erfindung bietet den Vorteil einer nicht nur erhöhten Geräuschabgabe, sondern eines erhöhten Anteils von Tönen bestimmter Frequenzen am Fahrgeräusch, die sehr eindringlich auf das Ohr des Fahrers wirken und die bei erhöhten Geschwindigkeiten besonders unangenehm werden. Dadurch wird der Fahrer veranlaßt, genügend langsam zu fahren und den nach einer Panne aufgezogenen Reservereifen umgehend in einer Werkstatt durch einen Normalreifen auswechseln zu lassen.

Durch die geringe Profiltiefe von nur ca. 4 mm ergibt sich der Vorteil, daß ein Reservereifen mit der erfindungsgemäßen Laufflächengestaltung sowohl mit einem Unterbau in diagonaler als auch mit einem solchen in radialer Bauweise versehen sein kann.

Vorteilhafte Ausgestaltungen der Erfindung sind den weiteren Unteransprüchen zu entnehmen.

Nachfolgend wird ein Ausführungsbeispiel der Erfindung beschrieben und anhand einer Zeichnung erläutert.

Es zeigt

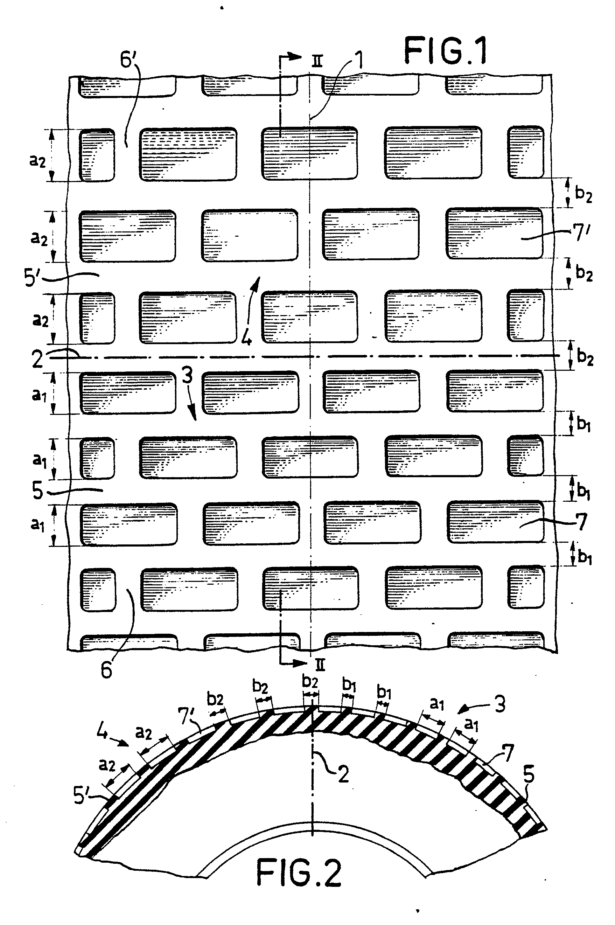

Figur 1 eine Teildraufsicht auf eine äußere Umfangsfläche eines Reservereifens für Straßenfahrzeuge (schematisch),

Figur 2 einen Teilschnitt des Reifens in einer Ebene senkrecht zur Axialrichtung auf der Linie II-II der Fig. 1.

Die Mitte des Laufstreifens mit der Laufflächengestaltung ist durch eine Linie 1 aufgezeigt, die gleichzeitig die Reifenumfangsrichtung wiedergibt.

Mittels einer in Axialrichtung verlaufenden Linie 2 ist eine Unterteilung der äußeren Reifenumfangsfläche in mehrere Abschnitte, vorliegend in zwei gleich lange Abschnitte 3, 4, also in zwei Hälften angedeutet.

Im ersten Abschnitt 3 besteht das Laufflächenprofil im wesentlichen aus von einem Laufflächenrand zum anderen Laufflächenrand durchlaufend und ununterbrochen sich erstreckenden Querstegen 5, die über kurze, sich in Umfangsrichtung erstreckende Umfangsstege 6 verbunden sind, und zwar in der Weise, daß die Stege 6 für aufeinanderfolgende Querstegpaare gegeneinander versetzt sind.

Die Stege 5, 6 begrenzen im wesentlichen querverlaufende rechteckige Vertiefungen 7 mit der Breite $a_1$, die aufgrund der Stege 5, 6 bei satter Auflage auf der Fahrbahn zellenartige Einschließungen bilden. Die Breite $b_1$ der Querstege 5 liegt etwas über der halben Umfangserstreckung der Vertiefungen 7 bzw. dem halben gegenseitigen Abstand der Querstege 5. Diese Bemessung kann auch für die Umfangsstege 6 zutreffen, die jedoch um das vierfache Maß der Stegbreite auf gegenseitiger Entfernung stehen.

Im zweiten Abschnitt 4 der Lauffläche ist die Laufflächengestaltung ähnlich ausgebildet wie im ersten. Dabei ist « ähnlich » zumindest hinsichtlich der Breiten der Querstege 5, 5' und der Vertiefungen 7, 7' im geometrischen Sinn zu verstehen, d. h. es gilt $a_1 : a_2 = b_1 : b_2$, wenn man mit $a_2$ die Breite einer Vertiefung 7' und mit $b_2$ die eines Querstegs 5' im zweiten Abschnitt 4 der Lauffläche bezeichnet. Im vorliegenden Beispiel hat das Verhältnis $a_1 : a_2$ den Wert 4/5.

Innerhalb eines jeden Abschnitts 3, 4 haben die Vertiefungen 7, 7', Querstege 5, 5' und Umfangsstege 6, 6' gleiche Abmessungen, während die Profiltiefe für beide Abschnitte gemeinsam ca. 4 mm beträgt.

Außer dem im Ausführungsbeispiel beschriebenen Fall kann die Umfangsfläche auch in mehr als zwei Abschnitte unterteilt sein, und es kann bei zwei Abschnitten auch günstig sein, unterschiedliche Längen für die beiden Abschnitte zu wählen. In jedem Fall sollte zumindest einer der Abschnitte bevorzugt eine Länge von 25 % bis 75 % der gesamten Umfangslänge aufweisen.

Bei der Wahl von zwei bzw. vier Abschnitten und Vertiefungen 7, 7' und Querstegen 5, 5' mit zwei unterschiedlichen Breiten $a_1$, $a_2$ bzw. $b_1$, $b_2$

sollten die Breitenverhältnisse $a_1 : a_2$ bzw. $b_1 : b_2$ zwischen 6 : 10 und 9 : 10 betragen.

Es ist jedoch nicht ausgeschlossen, die Reifenumfangsfläche z. B. in drei Abschnitte mit von Abschnitt zu Abschnitt unterschiedlichen Breiten für die Ausnehmungen und die Stege zu unterteilen, jedoch sollten auch in diesem Fall die unterschiedlichen Vertiefungen und Querstege geometrisch ähnlich sein.

Es ist anzumerken, daß die Lauffflächengestaltung, nicht zuletzt aufgrund der geringen Profiltiefe, hervorragend sowohl bei Radialreifen als auch bei Diagonalreifen eingesetzt werden kann.

## Patentansprüche

1. Laufflächengestaltung für Fahrzeugluftreifen für Reserveräder, mit in großer Anzahl in Reifenumfangsrichtung nebeneinander und hintereinander angeordneten Vertiefungen (7, 7'), die bei etwa rechteckigem Grundriß quer zur Reifenumfangsrichtung verlaufen, und mit Querstegen (5, 5') und Umfangsstegen (6, 6'), die die Vertiefungen voneinander trennen und eine Breite aufweisen, die etwa 1/4 bis 3/4 der Umfangserstreckung der benachbarten Vertiefungen entspricht, dadurch gekennzeichnet, daß die radial außenliegende Umfangsfläche des Reifens in mehrere in Umfangsrichtung aufeinanderfolgende Abschnitte (3, 4) unterteilt ist, daß innerhalb eines jeden Abschnitts (3, 4) die Umfangserstreckung der Vertiefungen (7, 7') und der Querstege (5, 5') konstant ist und daß bei den aufeinanderfolgenden Abschnitten (3, 4) die Umfangserstreckung der Vertiefungen (7, 7') und der Querstege (5, 5') unterschiedlich gewählt ist.

2. Laufflächengestaltung nach Anspruch 1, dadurch gekennzeichnet, daß zumindest einer der Abschnitte (3, 4) zwischen 25 % und 75 % der gesamten Reifenumfangsfläche umfaßt.

3. Laufflächengestaltung nach den Ansprüchen 1 und 2, dadurch gekennzeichnet, daß die Umfangserstreckungen der Vertiefungen (7, 7') und der Querstege (5, 5') zweier aufeinanderfolgender Abschnitte (3, 4) im Verhältnis von 6 : 10 bis 9 : 10, vorzugsweise von 8 : 10 stehen.

4. Laufflächengestaltung nach den Ansprüchen 1 und 2, dadurch gekennzeichnet, daß die Umfangsfläche in zwei gleich lange Abschnitte (3, 4) unterteilt ist.

5. Laufflächengestaltung nach einem der vorhergehenden Ansprüche, gekennzeichnet durch eine Profiltiefe der Vertiefungen (7, 7') von etwa 4 mm.

6. Fahrzeugluftreifen mit einer Laufflächengestaltung nach Anspruch 1, dadurch gekennzeichnet, daß der Reifenunterbau in diagonaler oder radialer Bauweise ausgeführt ist.

## Claims

1. Tread pattern for pneumatic vehicle tyres for spare wheels, having recesses (7, 7') which are disposed in large number adjacent to one another and behind one another in the circumferential direction of the tyre and extend transversely at right angles to the circumferential direction of the tyre with a substantially rectangular configuration, and having transverse webs (5, 5') and circumferential webs (6, 6') which separate the recesses from one another and have a width which corresponds substantially to between 1/4 and 3/4 of the circumferential extension of the adjacent recesses, characterised in that the radially outer circumferential surface of the tyre is divided into a plurality of portions (3, 4) which succeed one another in the circumferential direction, in that the circumferential extension of the recesses (7, 7') and of the transverse webs (5, 5') is constant within each portion (3, 4) and in that, for the successive portions (3, 4), the circumferential extension of the recesses (7, 7') and of the transverse webs (5, 5') is variably selected.

2. Tread pattern according to claim 1, characterised in that at least one of the portions (3, 4) occupies between 25 % and 75 % of the entire circumferential surface of the tyre.

3. Tread pattern according to claim 1 and 2, characterised in that the circumferential extensions of the recesses (7, 7') and of the transverse webs (5, 5') of two successive portions (3, 4) lie in the ratio of between 6 : 10 and 9 : 10, preferably 8 : 10.

4. Tread pattern according to claims 1 and 2, characterised in that the circumferential surface is divided into two portions (3, 4) of equal length.

5. Tread pattern according to one of the preceding claims, characterised by the recesses (7, 7') having a profile depth of substantially 4 mm.

6. Pneumatic vehicle tyre having a tread pattern according to claim 1, characterised in that the sub-structure of the tyre is constructed in a cross-ply or radial manner.

## Revendications

1. Sculpture de surface de roulement pour pneumatiques de véhicules pour roues de secours, comportant des enfoncements (7, 7') disposés en grand nombre l'un à côté de l'autre et l'un derrière l'autre dans la direction périphérique du pneu et courant transversalement par rapport à la direction périphérique du pneu dans le cas d'un contour à peu près rectangulaire, et comportant des barrettes transversales (5, 5') et des barrettes périphériques (6, 6') qui séparent l'un de l'autre les enfoncements et présentent une largeur qui correspond à peu près à 1/4 à 3/4 de l'extension périphérique des enfoncements voisins, caractérisée en ce que la surface périphérique, situé radialement à l'extérieur, du pneu est divisé en plusieurs tronçons (3, 4) qui se suivent dans la direction périphérique, en ce qu'à l'intérieur de chacun des tronçons (3, 4) l'extension périphérique des enfoncements (7, 7') et des barrettes transversales (5, 5') est constante et en ce que l'on choisit différente l'extension périphérique des enfoncements (7, 7') et des barrettes transversales (5, 5') dans les tronçons (3, 4) qui se suivent.

2. Sculpture de surface de roulement selon la revendication 1, caractérisée en ce qu'au moins l'un des tronçons (3, 4) englobe entre 25 % et 75 % de la totalité de la surface périphérique du pneu.

3. Sculpture de surface de roulement selon les revendications 1 et 2, caractérisée en ce que les extensions périphériques des enfoncements (7, 7') et les barrettes transversales (5, 5') de deux tronçons (3, 4) qui se suivent sont dans le rapport 6 : 10 à 9 : 10, de préférence 8 : 10.

4. Sculpture de surface de roulement selon les revendications 1 et 2, caractérisée en ce que l'on divise la surface périphérique en deux tronçons d'égale longueur (3, 4).

5. Sculpture de surface de roulement selon l'une des revendications précédentes, caractérisée par une profondeur de profil des enfoncements (7, 7') d'environ 4 mm.

6. Pneumatique de véhicule présentant une sculpture de surface de roulement selon la revendication 1, caractérisé en ce que le pneumatique est à structure diagonale ou radiale.

# FIG.1

# FIG.2